# EUROPÄISCHE PATENTSCHRIFT

(11) **EP 1 725 418 B1**
(45) Veröffentlichungstag und Bekanntmachung des Hinweises auf die Patenterteilung: **10.10.2018**
(21) Anmeldenummer: 05733826.1
(22) Anmeldetag: 12.03.2005
(51) Int. Cl.: B60L 7/28, F16D 65/14, F16D 53/00, B61H 7/08

(54) **MAGNETSCHWEBEBAHN MIT EINER WIRBELSTROMBREMSE**
MAGNETIC LEVITATION TRAIN PROVIDED WITH AN EDDY-CURRENT BRAKE
VOIE POUR TRAIN A SUSTENTATION MAGNETIQUE A FREIN A COURANTS DE FOUCAULT

(30) Priorität: 19.03.2004 DE 102004013994
(43) Veröffentlichungstag der Anmeldung: 29.11.2006
(73) Patentinhaber: ThyssenKrupp Transrapid GmbH, 34127 Kassel (DE)
(72) Erfinder: KUNZ, Siegbert, 83714 Miesbach (DE)
(74) Vertreter: Lorenz, Bernd Ingo Thaddeus
(86) Internationale Anmeldenummer: PCT/DE2005/000456
(87) Internationale Veröffentlichungsnummer: WO 2005/090113

(56) Entgegenhaltungen:
- US-A- 1 782 192
- US-A- 4 341 290
- US-A- 4 359 247
- US-B1- 6 412 611

## Beschreibung

Die Erfindung betrifft eine Magnetschwebebahn der im Oberbegriff des Anspruch 1 angegebenen Gattung und ein Magnetschwebefahrzeug dafür, nach Anspruch 7.

Bekannte Magnetschwebebahnen dieser Art werden z.B. durch Langstator-Linearmotoren angetrieben, die zum Antrieb der Fahrzeuge mit längs des Fahrwegs in einem Langstator verlegten Dreiphasen-Wechselstrom-Wicklungen versehen sind. Das Erregerfeld der Linearmotoren wird dabei von gleichzeitig als Erregermagnete wirkenden, im Fahrzeug angeordneten Tragmagneten geliefert (DE 39 17 058 C2). Die Linearmotoren können außer für den Antrieb auch zum Bremsen der Fahrzeuge verwendet werden. Hierzu ist es lediglich erforderlich, einen Strom mit einem im Vergleich zum üblichen Fahrbetrieb entgegengesetzten Vorzeichen in die Dreiphasen-Wechselstrom-Wicklungen des jeweiligen Langstators einzuspeisen.

Da z.B. beim Ausfall einzelner oder aller Trag- und Erregermagnete keine Bremsmöglichkeit mehr besteht, sind für hohe Geschwindigkeiten bestimmte Magnetschwebefahrzeuge zusätzlich mit einer sogenannten "sicheren" Bremse ausgerüstet, die z.B. eine Druckluftbremse sein kann (DE 30 04 705 C2). Wegen der bei Magnetschwebefahrzeugen ohnehin vorhandenen Trag- und Führmagnete bietet sich allerdings an, als sichere Bremse eine ebenfalls aus Magnetanordnungen bestehende Wirbelstrombremse zu verwenden, wie dies für die Magnetschwebebahn der eingangs bezeichneten Gattung zutrifft (z.B. ZEVrail Glasers Annalen, Sonderheft Transrapid, Oktober 2003, Seite 63). Eine derartige Wirbelstrombremse weist an vorgewählten Positionen jeweils Bremsmagnete auf, die mit am Fahrweg angebrachten, elektrisch leitenden Seitenführ- bzw. Reaktionsschienen zusammenwirken und in diesen bremsend wirkende Wirbelströme erzeugen. Nachteilig dabei ist, daß die zusätzlich von den Bremsmagneten senkrecht zu den Reaktionsschienen erzeugten Normalkräfte mit abnehmender Geschwindigkeit des Fahrzeugs zunehmen, insbesondere wenn die Wirbelstrombremsen auf konstante Bremskraft geregelt werden und daher zur Einhaltung der gewünschten Bremskräfte immer größere Ströme erforderlich werden, je stärker die Fahrzeuggeschwindigkeit abnimmt. Das hat zur Folge, daß die auf die Reaktionsschienen wirkenden Kräfte so stark zunehmen, daß sie zulässige, kritische Werte übersteigen und dadurch die mechanischen Verankerungen der Reaktionsschienen beschädigen können. Dem kann bisher nur dadurch abgeholfen werden, daß die mechanische Struktur des Fahrwegs entsprechend verstärkt wird.

Das von der vorliegenden Erfindung zu lösende Problem besteht darin, das Magnetschwebefahrzeug der eingangs bezeichneten Gattung so auszubilden, daß die Bremsmagnete der Wirbelstrombremse auch bei langsamer Fahrt keine unerwünscht großen Normalkräfte auf die Reaktionsschienen ausüben.

Zur Lösung dieses Problems dienen die kennzeichnenden Merkmale des Anspruchs 1.

Die Erfindung bringt den Vorteil mit sich, daß die Bremsmagnete bei langsamer Fahrt aufgrund der dabei unter Umständen über einen vorgewählten Grenzwert ansteigenden Normalkräfte an die Reaktionsschienen angelegt werden. Dadurch verlieren die Normalkräfte ihre Wirkung, d.h. die Reaktionsschienen werden nicht mehr von den Bremsmagneten angezogen. Die dadurch bewirkten Reibungskräfte haben in vorteilhafter Weise eine zusätzliche Bremswirkung zur Folge. Der durch die entstehende Reibung mögliche Verschleiß der Bremsmagnete kann durch Anbringung von Gleitplatten reduziert werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Teilschnitt durch eine übliche Magnetschwebebahn;
Fig. 2 eine Vorderansicht eines Teils der Magnetschwebebahn nach Fig. 1 in einem vergrößerten Maßstab;
Fig. 3 den Bremsmagneten einer Wirbelstrombremse für ein Magnetschwebefahrzeug der Magnetschwebebahn nach Fig. 1 in perspektivischer Darstellung;
Fig. 4 schematisch die erfindungsgemäße Montage eines Bremsmagneten der Wirbelstrombremse nach Fig. 3 am Magnetschwebefahrzeug in einer vergrößerten Einzelheit X der Fig. 2.

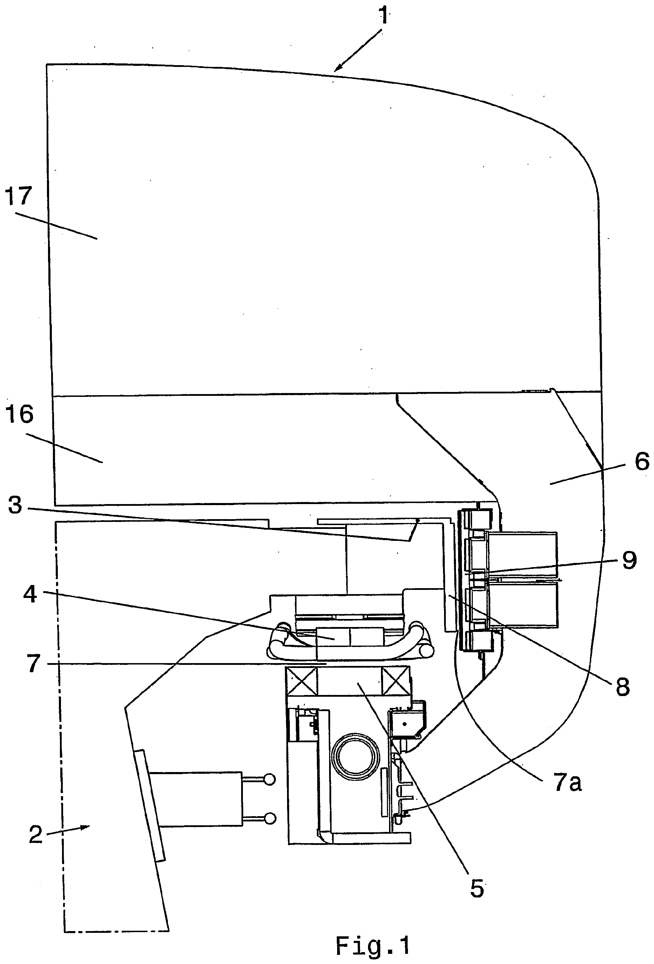

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt z.B. mittels eines Langstatormotors, der unterhalb der Fahrwegplatte 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstatormotors wird durch wenigstens einen Tragmagneten 5 erzeugt, der mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sonder erfüllt auch die Funktion des Tragens und Schwebens, indem er beim Betrieb des Magnetschwebefahrzeugs 1 einen vorgegebenen Spalt 7 von z.B. 10 mm zwischen dem Tragmagneten 5 und den Statorpaketen 4 aufrecht erhält.

Zur Spurführung des Magnetschwebefahrzeugs 1 weist die Fahrwegplatte 3 seitlich angebrachte Reaktions- bzw. Führschienen 8 auf, denen an den Gestellbügeln 6 montierte Führmagnete 9 gegenüberstehen, die beim Betrieb dazu dienen, zwischen sich und der Reaktionsschiene 8 einen dem Spalt 7 entsprechenden Spalt 7a aufrecht zu erhalten. Dabei bilden der in Fig. 1 gezeigte Tragmagnet 5 und der Führmagnet 9 jeweils ein an den Gestellbügeln 6 befestigtes Modul mit je einer Magnetanordnung für die Funktionen "Tragen" bzw. "Führen". Es ist jedoch klar, daß am Magnetschwebefahrzeug 1 seitlichen nebeneinander und in Fahrtrichtung hintereinander in der Regel eine Mehrzahl derartiger Module angebracht sein kann. Jedes Modul weist vorzugsweise einen Magnetrückenkasten auf, mit dem es an den Gestellbügeln 6 befestigt ist, die ihrerseits mit einem biegesteifen, Längs- und Querverbinder aufweisenden Untergestell bzw. Schweberahmen 16 verbunden sind, auf dem ein mit einer Fahrgastzelle versehner Wagenkasten 17 des Magnetschwebefahrzeugs 1 (Fig. 1) abgestützt ist.

Magnetschwebefahrzeuge 1 und deren Magnetanordnungen sind dem Fachmann z.B. aus den Druckschriften US-PS 4,698,895, DE 39 28 277 C1 und PCT WO 97/30 50 4 A1 allgemein bekannt.

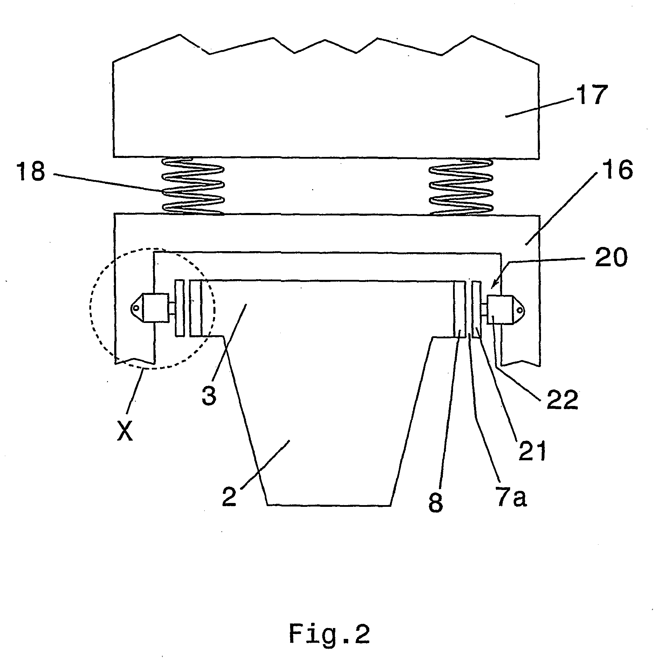

In Fig. 2 ist vereinfachend nur der Schweberahmen 16 und der darauf z.B. mittels Federn 18 abgestützte Wagenkasten 17 dargestellt. An der Innenseite des Schweberahmens 16 ist in Höhe der Reaktionsschiene 8 wenigstens je eine Wirbelstrombremse 20 vorgesehen. Diese enthält insbesondere einen Bremsmagneten 21, der mittels wenigstens einer Halterung 22 starr oder gelenkig am Schweberahmen 16 befestigt ist und dessen Wirkungsweise weiter unten näher erläutert wird.

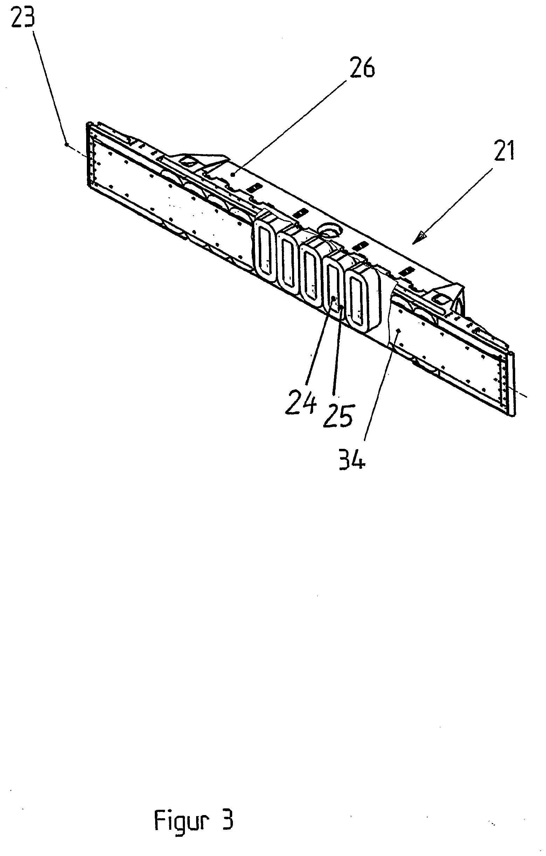

Der Bremsmagnet 21 ist vergrößert in Fig. 3 gezeigt. Er enthält in Richtung einer Längsachse 23 hintereinander angeordnete Magnetpole, die je einen nicht näher dargestellten Eisenkern 24 und eine diesen umgebende Wicklung 25 enthalten. Die verschiedenen Wicklungen 25 des Bremsmagneten 21 sind elektrisch in Reihe geschaltet und in nicht dargestellter Weise an eine Gleichspannungsquelle angeschlossen. Dabei ist der Wicklungssinn der Wicklungen 25 so gewählt, daß die Magnetpole beim Durchleiten eines elektrischen Stroms abwechselnd Nord- und Südpole bilden. Die einzelnen Eisenkerne 24 sind vorzugsweise durch nicht dargestellte Polrücken miteinander verbunden, und die gesamte Anzahl der Magnetpole ist an einem Magnetrückenkasten 26 befestigt, der z.B. entsprechend Fig. 2 zur Befestigung des Bremsmagneten 21 am Magnetschwebefahrzeug 1 dient. Die Zahl der Magnetpole ist dabei an sich beliebig. Im Ausführungsbeispiel sind zwölf Magnetpole vorhanden.

Im übringen ist der Bremsmagnet 21 mit seiner Längsachse 23 parallel zur Reaktionsschiene 8 und so angeordnet, daß seine Magnetpole der Reaktionsschiene 8 normalerweise mit einem Abstand gegenüber stehen, der im wesentlichen dem Spalt 7a in Fig. 1 und 2 entspricht. Dabei können sich, in Richtung der Längsachse 23 betrachtet, Führmagnete 9 und Bremsmagnete 21 in einer vorgewählten Reihenfolge abwechseln.

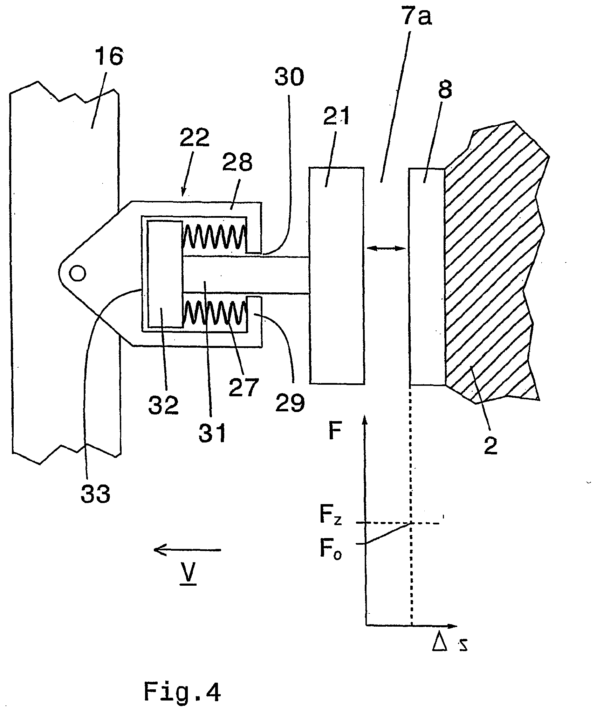

Erfindungsgemäß ist der Bremsmagnet 21, wie insbesondere Fig. 4 zeigt, mittels wenigstens einer Feder 27 beweglich am Magnetschwebefahrzeug, hier an dessen Schweberahmen 16 gehalten. Bei dieser Feder 27 kann es sich z.B. um eine Gummi-, Spiral- oder Schraubendruckfeder handeln. Zu diesem Zweck ist die Halterung 22 gemäß Fig. 4 als ein Hohlkörper 28 ausgebildet, der in einer Vorderwand 29 eine zur Reaktionsschiene 8 hin weisende Öffnung 30 aufweist, in der eine Stange 31 verschiebbar gelagert ist. Die Stange 31 trägt an einem aus der Öffnung 30 herausragenden Ende den Bremsmagneten 21, während sie an ihrem anderen Ende mit einem im Hohlkörper 28 verschiebbar gelagerten Kolben 32 versehen ist. Der Kolben 32 stützt sich mit seiner der Reaktionsschiene 8 zugewandten Breitseite an einem Ende der Feder 27 ab, deren anderes Ende an der Vorderwand 29 abgestützt ist. Dadurch drückt die Feder 27 den Kolben 32 und mit ihm den Bremsmagneten 21 in Richtung eines Pfeils v senkrecht von der Reaktionsschiene 8 weg, bis der Kolben 32 z.B. an einer Rückwand 33 des Hohlkörpers 28 anliegt. Aufgrund dieser Anordnung ist der Bremsmagnet 21 gegen die Vorspannkraft der Feder 27 in der zum Pfeil v entgegengesetzten Richtung bewegbar. Dabei ist die Anordnung so getroffen, daß der mögliche Hub des Kolbens 32 wenigstens gleich der Größe Δs (Fig. 4) des Spalts 7a ist. Der Bremsmagnet 21 kann daher gegen die Kraft der Feder 27 und unter Überbrückung des Spalts 7a an die Reaktionsschiene 8 angelegt werden. Außerdem ist die Vorspannkraft der Feder 27 im montierten Zustand nach Fig. 4 so gewählt, daß sich der Bremsmagnet 21 dann an die Reaktionsschiene 8 anlegt, wenn entgegengesetzt zum Pfeil v mit einer Kraft F auf ihn eingewirkt wird, die einer zulässigen Kraft Fz entspricht. Dies ist schematisch im unteren Teil der Fig. 4 anhand eines Schaubildes dargestellt, in dem längs der Abszisse der Weg und längs der Ordinate die auf den Bremsmagneten 21 einwirkende Kraft abgetragen ist.

Die Wirkungsweise des beschriebenen Bremsmagneten 21 ist wie folgt:
Bei normaler, mit hoher Geschwindigkeit erfolgender Fahrt des Magnetschwebefahrzeugs sind die Wicklungen 25 (Fig. 3) stromlos. Der Bremsmagnet 21 ist daher unwirksam. Ist eine Bremsung, insbesondere eine Notbremsung erforderlich, wird ein Gleichstrom von z.B. 80 A durch die Wicklungen 25 geleitet, wodurch aufgrund der hohen Fahrtgeschwindigkeit des Magnetschwebefahrzeugs 1 Wirbelströme in der aus einem elektrisch leitenden Material bestehenden Reaktionsschiene 8 erzeugt werden. Diese Wirbelströme haben einerseits die gewünschte Abbremswirkung in Fahrtrichtung des Magnetschwebefahrzeugs (= Längsrichtung 23) zur Folge. Andererseits wird eine parallel zum Pfeil v wirksame, senkrecht zur Reaktionsschiene 8 gerichtete Normalkraft wirksam, die aus der magnetischen Anziehungskraft der einzelnen Magnetpole resultiert und bei hohen Fahrtgeschwindigkeiten vergleichsweise klein ist. Bei einem starr am Magnetschwebefahrzeug 1 montierten Bremsmagneten 21 würde die Reaktionsschiene 8 daher in Richtung des Pfeils v nur schwach zum Bremsmagneten 21 hingezogen.

Bei kleiner werdenden Geschwindigkeiten des Magnetschwebefahrzeugs 1 wird die beschriebene Normalkraft jedoch immer größer, insbesondere wenn der Strom durch die Wicklungen 25 so geregelt wird, daß sich eine konstante Bremskraft ergibt. Dabei kann die Normalkraft so groß werden, daß die auf die Reaktionsschiene 8 ausgeübten Kräfte zu einer dauerhaften Beschädigung von deren Befestigungspunkten am Fahrweg führen.

Erfindungsgemäß setzt hier die Wirkung der Feder 27 ein. Wie die Kennlinie in Fig. 4 zeigt, wird der Bremsmagnet 21 bei größer werdender Normalkraft immer stärker in Richtung der Reaktionsschiene 8 bewegt, bis er, wie in Fig. 4 nicht einzeln dargestellt ist, an der Reaktionsschiene 8 anschlägt. Dadurch wird die auf die Reaktionsschiene 8 wirkende Normalkraft aufgehoben. Die statt dessen bei Geschindigkeiten von z.B. unter 100 km/h einsetzende Reibkraft trägt dann zusätzlich zur Bremswirkung bei. Eine Beschädigung der Magnetpole des Bremsmagneten 21 wird erfindungsgemäß vorzugsweise dadurch vermieden, daß die der Reaktionsschiene 8 zugewandte Seite des Bremsmagneten 21 mit einer Gleitplatte 34 (Fig. 3) aus einem gut gleitfähigen Material belegt wird.

Ein aus Fig. 4 ersichtlicher Vorteil der Erfindung besteht darin, daß die Reaktionsschiene 8 bzw. deren Befestigungspunkte am Fahrweg 2 nicht mehr belastet werden, sobald der Bremsmagnet 21 an der Reaktionsschiene 8 anliegt. Dadurch ist es möglich, die Vorspannkraft der Feder 27 so zu bemessen, daß die Auszugskraft der Reaktionsschiene 8 auch bei voller Einschaltung des Bremsmagneten 21 nicht überschritten werden kann, d.h. die mechanische Belastung der Reaktionsschiene 8 auch im nicht oder noch nicht anliegenden Zustand des Bremsmagneten 21 immer unterhalb eines kritischen bzw. zulässigen Wertes bleibt.

Ein weiterer Vorteil der Erfindung besteht darin, daß das Anlegen des Bremsmagneten 21 an die Reaktionsschiene 8 automatisch erfolgt und keine besondere Steuerung für diesen Zweck vorgesehen werden braucht. Außerdem kann die Kraft der Feder 7 leicht so gewählt werden, daß die durch sie bewirkten Rückstellkräfte kleiner als die vorgegebenen Auszugskräfte für die Reaktionsschiene 8 bleiben. Dabei wird die Federkennlinie vergleichsweise flach ausgebildet, damit der Bewegungshub des Bremsmagneten 21 erst beim Erreichen einer minimalen Normalkraft Fo beginnt.

Die Erfindung ist nicht auf das beschriebene Ausführungsbeispiel beschränkt, das sich auf vielfache Weise abwandeln läßt. Insbesondere kann anstelle der einen Feder 27 auch eine Mehrzahl von Federn 27 verwendet werden, wie Fig. 4 zeigt. Auch die Anbringung der Federn 27 und die Ankopplung der Halterung 22 an das Magnetschwebefahrzeug bzw. dessen Schweberahmen 16 ist weitgehend beliebig. Insbesondere kann pro Bremsmagnet 21 mehr als nur eine Halterung 22 vorgesehen werden. Außerdem ist klar, daß der erfindungsgemäß gelagerte Bremsmagnet 21 an beiden Seiten des Fahrwegs bzw. des Fahrzeugs 1 vorgesehen werden könnte, wie Fig. 2 zeigt. Weiterhin können in Längsrichtung des Fahrzeugs mehrere der beschriebenen Bremsmagnete 21 hintereinander oder im Wechsel mit den Führmagneten 9 (Fig. 1) angeordnet werden.

## Patentansprüche

1. Magnetschwebebahn mit einem eine Reaktionsschiene (8) aufweisenden Fahrweg (2, 3) und einem auf diesem parallel zur Reaktionsschiene (8) fahrbar angeordneten, mit einer Wirbelstrombremse (20) versehenen Fahrzeug (1), wobei die Wirbelstrombremse (20) wenigstens einen, zum Zusammenwirken mit der Reaktionsschiene (8) bestimmten und im Abstand zu dieser gehaltenen Bremsmagneten (21) mit wenigstens einem eine Wicklung (25) aufweisenden Magnetpol enthält, der bei Erregung der Wicklung (25) außer einer in Fahrtrichtung wirkenden Bremskraft eine senkrecht zur Reaktionsschiene (8) wirkende, von der Fahrtgeschwindigkeit abhängige Normalkraft entwickelt, **dadurch gekennzeichnet, daß** der Bremsmagnet (21) quer zur Reaktionsschiene (8) und derart am Fahrzeug (1) bewegbar gelagert ist, daß er beim Überschreiten einer vorgewählten Normalkraft an die Reaktionsschiene (8) anlegbar ist.

2. Magnetschwebebahn nach Anspruch 1, **dadurch gekennzeichnet, daß** das Anlegen des Bremsmagneten (21) an die Reaktionsschiene (8) selbsttätig erfolgt.

3. Magnetschwebebahn nach Anspruch 1 oder 2, **dadurch gekennzeichnet, daß** der Bremsmagnet (21) mittels wenigstens einer vorgespannten Feder (27) am Fahrzeug (1) gehalten ist.

4. Magnetschwebebahn nach Anspruch 3, **dadurch gekennzeichnet, daß** die Feder (27) bei an der Reaktionsschiene (8) anliegendem Bremsmagneten (21) eine Rückstellkraft auf diesen ausübt, die kleiner als eine vorgegebene Auszugskraft für die Reaktionsschiene (8) ist.

5. Magnetschwebebeahn nach Anspruch 3 oder 4, **dadurch gekennzeichnet, daß** die Feder (27) eine flache Federkennlinie aufweist.

6. Magnetschwebebahn nach einem der Ansprüche 1 bis 5, **dadurch gekennzeichnet, daß** der Bremsmagnet (21) mit einer Gleitplatte (34) versehen ist.

7. Magnetschwebefahrzeug für eine Magnetschwebebahn nach einem der Ansprüche 1 bis 6, welches eine Wirbelstrombremse (20) aufweist, wobei die Wirbelstrombremse (20) wenigstens einen, zum Zusammenwirken mit der Reaktionsschiene (8) bestimmten Bremsmagneten (21) mit wenigstens einem eine Wicklung (25) aufweisenden Magnetpol enthält, der bei Erregung der Wicklung (25) außer einer in Fahrtrichtung wirkenden Bremskraft eine senkrecht zur Reaktionsschiene (8) wirkende, von der Fahrtgeschwindigkeit abhängige Normalkraft entwickelt, **dadurch gekennzeichnet, dass** der Bremsmagnet (21) quer zur Reaktionsschiene (8) und derart am Fahrzeug (1) bewegbar gelagert ist, dass er beim Überschreiten einer vorgewählten Normalkraft an die Reaktionsschiene (8) anlegbar ist.

## Claims

1. Magnetic levitation train with a track (2, 3) having a reaction rail (8) and a vehicle (1), provided with an eddy current brake (20), arranged to travel thereon in parallel to the reaction track (8), wherein the eddy current brake (20) contains at least one braking magnet (21) which has at least one magnetic pole having a winding (25), and which is intended for interacting with the reaction rail (8) and is held at a distance therefrom, which on excitation of the winding (25), in addition to a braking force acting in the direction of travel, develops a normal force which is dependent on the speed of travel and acts perpendicularly to the reaction rail (8), **characterised in that** the braking magnet (21) is borne transversely to the reaction rail (8) and is borne on the vehicle (1) in a movable manner so that it can be applied to the reaction rail (8) on exceeding a preselected normal force.

2. Magnetic levitation train according to claim 1 **characterised in that** the application of the braking magnet (21) to the reaction rail (8) takes place automatically.

3. Magnetic levitation train according to claim 1 or 2 **characterised in that** the braking magnet (21) is held on the vehicle (1) by means of at least one pre-tensioned spring (27).

4. Magnetic levitation train according to claim 3 **characterised in that** when the braking magnet (21) is applied to the reaction rail (8) the spring (27) exerts a restoring force thereon which is smaller than a predetermined withdrawal force for the reaction rail (8).

5. Magnetic levitation train according to claim 3 or 4 **characterised in that** the spring (27) has flat spring characteristics.

6. Magnetic levitation train according to any one of claims 1 to 5 **characterised in that** the braking magnet (21) is provided with a sliding plate (34).

7. Magnetic levitation vehicle for a magnetic levitation train according to any one of claims 1 to 6 which has an eddy current brake (20), wherein the eddy current brake (20) contains at least one braking magnet (21) which has at least one magnetic pole having a winding (25), and which is intended for interacting with the reaction rail (8) and is held at a distance therefrom, which on excitation of the winding (25), in addition to a braking force acting in the direction of travel develops a normal force which is dependent on the speed of travel and acts perpendicularly to the reaction rail (8), **characterised in that** the braking magnet (21) is borne transversely to the reaction rail (8) and is borne on the vehicle (1) in a movable manner so that it can be applied to the reaction rail (8) on exceeding a preselected normal force.

## Revendications

1. Train à sustentation magnétique, pourvu d'une trajectoire (2, 3) comportant un rail de réaction (8) et d'un véhicule (1) placé sur celui-ci en étant déplaçable à la parallèle du rail de réaction (8) muni d'un frein à courant de Foucault (20), le frein à courant de Foucault (20) contenant au moins un aimant-frein (21), destiné à coopérer avec le rail de réaction (8) et maintenu avec un écart par rapport à celui-ci, doté d'au moins un pôle magnétique comportant un bobinage (25), qui lors de l'excitation du bobinage (25) développe hormis une force de freinage agissant dans la direction de déplacement, une force normale agissant à la perpendiculaire du rail de réaction (8), dépendant de la vitesse de déplacement, **caractérisé en ce que** l'aimant-frein (21) est logé en étant mobile à la transversale du rail de réaction (8) et de telle sorte sur le véhicule (1), que lors d'un déplacement d'une force normale présélectionnée, il puisse s'appliquer sur le rail de réaction (8).

2. Train à sustentation magnétique selon la revendication 1, **caractérisé en ce que** l'application de l'aimant-frein (21) sur le rail de réaction (8) s'effectue automatiquement.

3. Train à sustentation magnétique selon la revendication 1 ou 2, **caractérisé en ce que** l'aimant-frein (21) est maintenu sur le véhicule (1) au moyen d'au moins un ressort (27) précontraint.

4. Train à sustentation magnétique selon la revendication 3, **caractérisé en ce que** lorsque l'aimant-frein (21) est appliqué sur le rail de réaction (8), le ressort (27) exerce sur celui-ci une force de rappel qui est inférieure à une force de traction prédéfinie pour le rail de réaction (8).

5. Train à sustentation magnétique selon la revendication 3 ou 4, **caractérisé en ce que** le ressort (27) présente une courbe caractéristique de ressort plate.

6. Train à sustentation magnétique selon l'une quelconque des revendications 1 à 5, **caractérisé en ce que** l'aimant-frein (21) est muni d'une plaque de glissement (34).

7. Véhicule à sustentation magnétique, destiné à un train à sustentation magnétique selon l'une quelconque des revendications 1 à 6, lequel comporte un frein à courant de Foucault (20), le frein à courant de Foucault (20) contenant au moins un aimant-frein (21), destiné à coopérer avec le rail de réaction (8), doté d'au moins un pôle magnétique comportant un bobinage (25), qui lors de l'excitation du bobinage (25) développe hormis une force de freinage agissant dans la direction de déplacement, une force normale agissant à la perpendiculaire du rail de réaction (8), **caractérisé en ce que** l'aimant-frein (21) est logé en étant mobile à la transversale du rail de réaction (8) et de telle sorte sur le véhicule (1), que lors d'un déplacement d'une force normale présélectionnée, il puisse s'appliquer sur le rail de réaction (8.
